# EUROPEAN PATENT APPLICATION

(11) **EP 3 453 998 A1**
(43) Date of publication of application: **13.03.2019**
(21) Application number: 17189668.1
(22) Date of filing: 06.09.2017
(51) Int. Cl.: F28D 20/00, F23C 10/00, F23C 99/00, F28D 7/02, F28D 7/04, F28D 7/00

(54) **SYSTEM FOR ENERGY STORAGE INCLUDING HEAT EXCHANGERS**

(71) Applicant: Nederlandse Organisatie voor toegepast- natuurwetenschappelijk onderzoek TNO, 2595 DA 's-Gravenhage (NL)
(72) Inventor: Cuypers, Ruud, 2595 DA 's-Gravenhage (NL); Geers, Leonard Ferdinand Gerard, 2595 DA 's-Gravenhage (NL); Bodis, Pavol, 2595 DA 's-Gravenhage (NL); van Vliet, Laurens Daniël, 2595 DA 's-Gravenhage (NL); Schols, Erin Elisabeth, 2595 DA 's-Gravenhage (NL); Kalkman, Arie Jacobus, 2595 DA 's-Gravenhage (NL)
(74) Representative: V.O.

(57) **Abstract**

The invention is directed to a system for energy storage comprising a chemical combustion reactor that is at least partially filled with a metal and/or an oxide thereof, and that comprises a gas inlet and a gas outlet; one or more heat exchangers comprising a heat transfer fluid such as water, wherein said chemical combustion reactor is thermally connected to said heat exchangers.

## Description

The invention is in the field of energy storage and conversion. The invention is in particular directed to a system for electrical and thermal energy storage and conversion.

The supply of alternative energy sources such as solar, wind and hydro-powered energy generally depends on the amount of available sunlight, wind, water etc. As such, these alternative energy sources are associated with fluctuating supplies and as society moves from fossil-fuel based energy supplies to alternative energy sources, the need for energy storage systems to accommodate these fluctuating supplies and to cover mismatch between supply and demand has become more pronounced, in particular on the level of households or neighborhoods as well as on the level of industrial process that are or will be dependent on alternative energy sources.

Several systems for energy storage on the level of households or neighborhoods have been proposed. Examples of energy storage devices include hot water tanks (boiler technology), lithium-ion batteries and thermochemical energy storage devices. A particular challenge in this field is to achieve a high energy storage density with a minimal loss of energy during prolonged storage. With hot water tank technology, it is typically possible to achieve an energy storage density of about 0.1 to 0.15 GJ/m³ on system level, using typical loading and unloading temperatures, while with thermochemical energy storage devices based on adsorption and desorption of for instance water on hydroscopic salts (as *e.g.* described in Cot-Gores et al., Renewable and Sustainable Energy Reviews 16 (2012) 5207-5224), an energy storage density in the range of typically 0.1 to 1 GJ/m³ on a system level is possible.

A particular high energy storage density can be achieved with chemical looping combustion (CLC), namely up to about 12 GJ/m³ on a system level. CLC is based on fuel combustion with the use of an intermediate oxygen carrier that is generally cycled between two reactors, *i.e.* an oxidizing reactor and a reducing reactor, or in a single reactor used alternatingly as oxidizing and reducing reactor. In the oxidizing reactor, a metal is brought into contact with an oxygen-containing gas (also referred to as an oxidizing gas, *e.g.* air) to produce metal oxides and heat. The heat can subsequently be used for other purposes, for instance to drive a turbine to produce electricity. In the reducing reactor, the fuel (*e.g.* methane) is contacted with the metal oxide to produce metal, CO₂ and water, while chemically storing the energy of the fuel (see Hossain et al., Chemical engineering science 2008, 63, 4433-4451). In general, CLC is used to decouple the flue gases nitrogen gas and CO₂ in the fuel combustion and not for the storage of energy.

A drawback of conventional CLC for the use of energy storage is the poor control over the discharging and charging of the reactors due to the rapid redox reactions. In addition, during discharge (*i.e.* during the production of heat) some of the generated heat can not be exchanged with the system. For instance, if the hot exhaust gases of the CLC reactor are used to heat an electricity turbine, the heat radiated by the CLC reactor can not be used. In addition, the entire reactor must be heated before hot gas is expelled.

It is desired to provide a system that solves at least one of these drawbacks.

Surprisingly, the present inventors found that thermally connecting a chemical combustion reactor with one or more heat exchangers comprising heat transfer fluid (HTF) provides a more flexible system such that control over the demand and supply is improved. A further advantage is that energy loss is reduced since the heat exchanger enables an improved control and possibility to maintain the chemical combustion reactor within the optimal operating temperature range.

Accordingly, the present invention is directed to a system for energy storage comprising
- a chemical combustion reactor (3) that is at least partially filled with a metal and/or an oxide thereof (4), and that comprises a gas inlet (5) and a gas outlet (6);
- one or more heat exchangers (1) comprising a heat transfer fluid (2) such as water;
wherein said chemical combustion reactor is thermally connected to said heat exchangers.

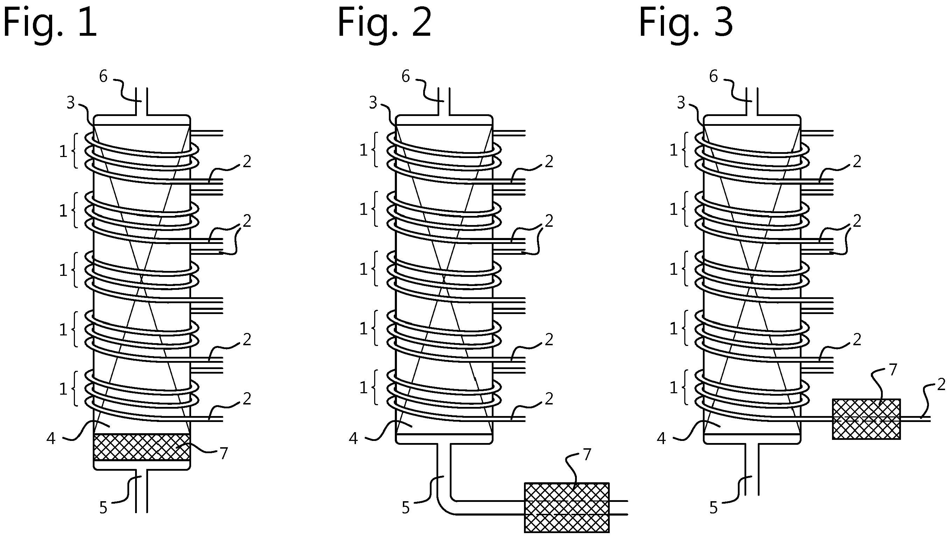

Figures 1 to 6 illustrate particular embodiments of the present invention.

Advantageously, discharging of the chemical combustion reactor can be carried out with more control, meaning that the oxidation reaction in the chemical combustion reactor can be carried out slower than in the absence of the heat exchangers. This has several advantages, in particular when the chemical combustion reactor is a fixed bed chemical combustion reactor, which is preferred. Firstly, a slower reaction is more controlled in the sense that the reaction front that moves through the reactor (*i.e.* the local site where the oxidizing gas stream reacts with the metal, also referred to as heat front) remains sharp, thin and locally well-defined such that the reaction front moves evenly through the reactor. A faster reaction generally results in a disturbed reaction front which is less efficient in terms of heat generation and heat exchange. Secondly, it enables a more effective use of the reactive content of the chemical combustion reactor since the supply of heat can be better matched with the demand.

Preferably, the reaction front moves through the chemical combustion reactor with a rate in the range of 0.1 to 0.5 mm/s, preferably about 0.2 mm/s. A chemical combustion reactor having a length of 2 meter (which would typically fit in a household environment), being discharged at a rate of 0.2 mm/s would last about 3 hours.

Typically, the discharging of the chemical combustion reactor requires activation energy and pre-heating of the metal before the oxidation reaction can be carried out. Accordingly, in a preferred embodiment, the system further comprising one or more heaters (7) that are thermally connected to the chemical combustion reactor. In a further preferred embodiment, the heater is located in the chemical combustion reactor, for instance at the end where the oxidizing gas is led into the reactor, or elsewhere along the reactor, such that it can locally heat part of the metal and/or an oxide thereof, as illustrated in figure 1. Alternatively, the heater may be thermally connected to a gas input through which the oxidizing gas is led towards and into the chemical combustion reactor such that the gas can be heated and the heated gas can heat the metal for the oxidation reaction to commence, as illustrated in figure 2. The heater connected to the gas input system can be particularly suitable for re-initiating the discharging of the chemical combustion reactor if it already has partially been consumed, or the charging when this was intermediately stopped. In yet another embodiment, the heater may be an external oven in which the chemical combustion reactor is placed such that the chemical combustion reactor can be evenly heated as a whole.

In a particular embodiment, a single heater is connected to multiple inputs of multiple chemical combustion reactors (*vide infra* for a further description of the plurality of the chemical combustion reactors). This configuration is particularly suitable and efficient for operating multiple chemical combustion reactors in a parallel manner. It may be appreciated that the system may also comprise more than one heater and a combination of several heaters at different locations (*e.g.* one or more heaters may be located in the chemical combustion reactor in combination with one ore more heaters that are thermally connected to the inlet of the chemical combustion reactor).

The chemical combustion reactor is typically and elongated reactor, *e.g*. a cylinder-shaped reactor. In a preferred embodiment, the system comprises two or more heat exchangers per chemical combustion reactor, which heat exchangers are thermally connected in a sequential manner with respect to each other, in the same direction as the heat front moves through the reactor when the reactor is discharged. This means that the heat front passes from one to another heat exchanger when moving through the reactor. The heat front essentially moves like the gas passes through the reactor from the gas inlet to the gas outlet. In figure 1, five sequential heat exchangers on a single chemical combustion reactor are depicted as an example.

The number of heat exchangers per chemical combustion reactor can be large, for instance up to 100, but is typically limited for practical reasons. Preferably, each chemical combustion reactor comprises between 2 to 15 heat exchangers. The heat exchangers can typically be independently operated meaning that the flowrate of each heat exchanger can be set independently from the flowrate of the other heat exchangers.

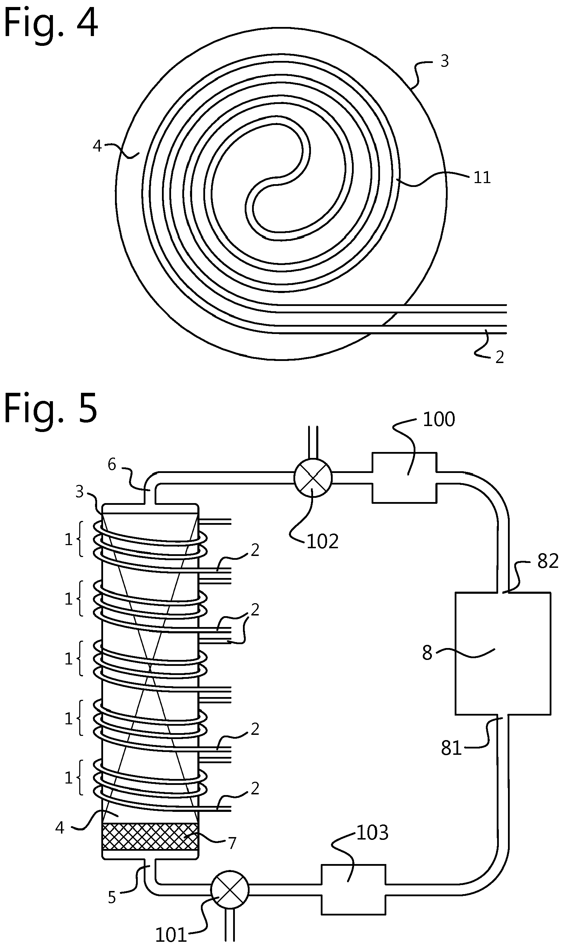

The heat exchanger may comprise a spiral or coiled tube that is placed around and/or within the chemical combustion reactor. A schematic representation of a spiral-shape tube (11) that is at least partially located within the chemical combustion reactor is depicted in figure 4.

In a particular embodiment of the present invention, the heater may be thermally connected to the heat exchanger such that the HTF in the heat exchanger can be heated which can subsequently heat the chemical combustion reactor to initiate the oxidation reaction therein (Figure 3). In a preferred embodiment, one or more, preferably each of the heat exchangers may be thermally connected to a different heater such that the HTF in each heat exchanger can be independently heated from the other heat exchangers. This is particularly suitable for the embodiments wherein two or more heat exchangers are positioned sequentially because it enables local heating of the reactor at a selected site (depending on which heat exchanger is heated) and therewith can facilitate restarting of the discharging if discharging was temporarily terminated before the charge of the reactor was depleted (*i.e.* if part of the metal in the reactor has not been converted to its oxide, or during reduction, see herein-above). If the heater is located in the chemical combustion reactor at the end where the oxidizing gas is led into the reactor, restart of the reactor would require heating the entire reactor up to the point where the metal has not yet been converted. This would thus require additional energy and time. It may be appreciated that the system may comprise one or more, or all of the above-described heaters, as well as combination thereof.

The present system can be used in household or industrial settings. It is particularly suitable for providing heat to industrial processes. For instance, the temperature by discharging the reactor can range from 300 to 700 °C, and is typically about 450 °C (depending on the type of metal that is used) which is sufficient for the production of pressurized steam.

The temperature to which the HTF is heated in the heat exchangers during discharging of the reactor can *i.a.* be controlled by the flowrate of the HTF within the heat exchanger. Thus HTF having lower temperatures such as 60 or 70 °C for heating water in household settings can also be obtained. The temperature of the reactor can similarly be controlled. A higher flow rate will typically transfer more heat than a lower flow rate, resulting in a relatively cooler reactor or section thereof. Also for this reason, it may be preferred to provide the reactor with several sequential heat exchangers as this enable a temperature variation within the reactor.

Charging of the chemical combustion reactor can be carried out by providing a reducing gas stream, preferably a reducing gas stream comprising hydrogen gas, and leading said reducing gas stream into the chemical combustion reactor and allowing the reducing gas stream to react with a metal oxide in the chemical combustion reactor to reduce the metal oxide. Depending on the reducing gas stream, the charging reaction may be endo- or exothermic. In particular when this reaction is endothermic, it may be preferred to transfer the HTF in the heat exchanger which is thermally connected to the chemical combustion reactor to a HTF storage tank to restrict or prevent heat being transferred from the HTF in the heat exchanger to the chemical combustion reactor, and therefore to optimize heating the active material. Therefore, the system preferably further comprises a HTF storage tank that is in fluid connection to said heat exchanger. In case the HTF comprises mainly water, it may also be possible to remove the HTF altogether from the system, *i.e.* send it down the drain. In such case, a sink can be fitted in the system.

In the embodiments wherein the reducing gas comprises hydrogen, it is preferred that the system further comprises a hydrogen getter. Such a getter can act as a hydrogen sponge to adsorb remaining hydrogen from the system after charging it. This may render purging of the system unnecessary and allows re-use of the remaining hydrogen gas during a subsequent charge.

The system of the present invention may comprise multiple chemical combustion reactors, multiple heat exchangers and multiple heat exchangers per chemical combustion reactor. In a preferred embodiment, the system comprises a plurality of the chemical combustion reactor, wherein each chemical combustion reactor comprises multiple sequentially positioned heat exchangers.

In embodiments with the plurality of the chemical combustion reactors, it is preferred that each reactor can be operated (*i.e.* charged and discharged) independently such that a modular system is provided. This results in additional flexibility to the system and enables for instance simultaneous charging and discharging of the system and energy conversion.

The charging of the chemical combustion reactor can be carried out with a reducing gas. Depending on the storage application of the system, the origin of the gas may differ. For instance, if the present system is used to store energy of (a surplus of) methane-comprising gas, for instance biogas, the reducing gas can comprise a methane-comprising gas. Alternatively, or additionally, if the present system is used to (virtually) store electrical energy (*i.e.* to store an excess of electricity by converting the electricity to the chemical energy storage and heat storage in accordance with the present invention), the reducing gas may be provided by electrolysis of a liquid, for instance water. Thus, the excess of energy electricity may be converted into chemical energy (*i.e.* in the form of the reducing gas), which may again be converted into heat. Accordingly, it is preferred that the system further comprises a reducing gas supply system, more preferably a water electrolyzing apparatus. This prevents the requirement of off-site gas generation and transportation.

As a preferred reducing gas, hydrogen is used. This gas advantageously typically only produces water upon charging of the chemical combustion reactor. In the embodiment wherein the system comprises the water electrolyzing apparatus (8) to provide the hydrogen-containing reducing gas, it is preferred that the water electrolyzing apparatus comprises a hydrogen gas outlet (81) that is connected to the gas inlet (5) of the chemical combustion reactor and a water inlet (82) that is connected to the gas outlet (6) of the chemical combustion reactor such that a closed water system is provided. It may be beneficial to include an evaporator and possibly a condenser (100) between the gas outlet (6) of the chemical combustion reactor and the inlet (82) of the electrolyzing apparatus to convert gaseous water into liquid water and/or to cool the water originating from the chemical combustion reactor (see figure 5). The several inlet and outlet may be connected through valves (101, 102), such that the possibility for supplying and discharging other gases (*e.g.* oxidizing gas) remains possible. As such, the system does not require an additional water supply (although this may nonetheless still be present to replenish water if some is lost due to leakage). In yet another embodiment, the water electrolyzing apparatus comprises an oxygen gas outlet that is connected to the gas inlet of the chemical combustion reactor such that the oxidizing gas for example may have a higher oxygen content than air. In addition, or alternatively, it may be convenient to further include an oxygen storage and/or an oxygen concentrator(103) between the outlet (81) of the inlet (5) of the chemical combustion reactor, such that the oxygen can be buffered and used at will. A higher oxygen content than air can be particularly beneficial in further limiting internal heat transfer, since there will be less inert gas present that would be capable of transferring the heat.

The chemical combustion reactor is filled with the metal and/or an oxide thereof (depending on the charge status of the reactor). Suitable metals comprise one or more metals selected from the group consisting of Al, Ti, V, Cr, Mn, Fe, Co, Ni, Cu, Zn, Zr and Sn, preferably Cu, Fe, Ni, Co, and/or Mn. More preferably the metal comprises copper. The metal may be metallic metal, or may be part of a salt or mineral such as ilmenite. Particularly suitable metals and minerals thereof are for instance described in Progress in Chemical-Looping Combustion and Reforming Technologies by Adánez *et al*., Progress in Energy and Combustion Science 38 (2012) p. 215-282 and in Study of inexpensive oxygen carriers for chemical looping combustion by Fossdal *et al*., International Journal of Greenhouse Gas Control 5 (2011) p. 483-488, which are both incorporated herein by reference. The metal may be metallic metal, or may be part of a mineral such as ilmenite.

The present system may be based on a fluidized bed comprising the metal and/or an oxide thereof. However, preferably the system is based on a fixed bed of the metal and/or an oxide thereof. Thus in preferred embodiments, the chemical combustion reactor is a fixed bed chemical combustion reactor that is at least partially filled with one or more fixed beds comprising said metal and/or an oxide thereof. Examples of suitable fixed bed chemical combustion reactors are for instance described in WO 2006/123925 and WO 2012/144896.

The fixed bed has a porous structure of which the exposed surface is preferably essentially entirely covered with said metal. The porous structure provided good excess of the gas to the metal, while maintaining optimal use of the space in the reactor to provide a high energy storage density. An example of a suitable porous structure is a porous carrier such as a zeolite having the metal and/or an oxide thereof on its surface. Another example of suitable structure is a mesh, grains, disks, rods or stacks thereof.

To provide an optimal heat transfer to the HTF in the heat exchangers, it may be advantageous that the fixed bed comprising the metal is configured as a plurality of layers within the chemical combustion reactor, and that one or more layers of said fixed bed is alternated with one or more heat insulating layers. The heat insulating layer can restrict heat transfer between the fixed bed layers that are divided by the heat insulating layer such that the heat transfer with the heat exchangers is promoted. It should be noted however, that the heat insulating layer is preferably not too insulating such that too little heat is transferred within the reactor and the discharging would cease due to hindrance of heating the metal to a temperature higher than the critical minimal temperature. The insulation layer can comprise inert materials such as ordinary steel, stainless steel, ceramics, air etc.

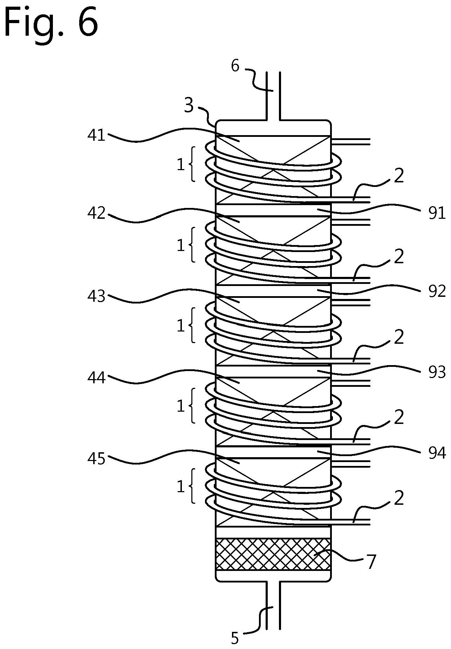

In a particular embodiment of the present invention, the chemical combustion reactor comprises separated cartridges (41-45) which are each based on a supporting frame to support or carry the fixed bed as is illustrated in figure 6. Said cartridges are stackable within the fixed bed chemical combustion reactor to limit the internal pressure of the fixed bed (*i.e.* the pressure of the load of the higher-placed part of the fixed bed onto the lower-placed parts). In between two cartridges may be kept a vacant space (91-94), which can serve to provide air as the insulating layers described herein-above. In a preferred embodiment, each cartridge may be thermally connected to a independently operationally heat exchanger, as illustrated in figure 6.

Limiting the internal pressure of the fixed bed can also be achieved by placing the reactor horizontally (instead of vertically as depicted in the figures).

For the purpose of clarity and a concise description features are described herein as part of the same or separate embodiments, however, it will be appreciated that the scope of the invention may include embodiments having combinations of all or some of the features described.

## Claims

1. System for energy storage comprising
- a chemical combustion reactor (3) that is at least partially filled with a metal and/or an oxide thereof (4), and that comprises a gas inlet (5) and a gas outlet (6);
- one or more heat exchangers (1) comprising a heat transfer fluid (2) such as water;
wherein said chemical combustion reactor is thermally connected to said heat exchangers.

2. System according to the previous claim, comprising two or more of said heat exchangers, preferably in the range of 2 to 15 heat exchangers per chemical combustion reactor, and wherein said heat exchangers are thermally connected with the chemical combustion reactor in a sequential manner with respect to each other, in the same direction as the heat front moves through the reactor when the reactor is discharged

3. System according to any of the previous claims, further comprising one or more heaters (7) that are thermally connected to the chemical combustion reactor and that, preferably are located in the chemical combustion reactor such that it can locally heat part of the metal and/or an oxide thereof in the chemical combustion reactor.

4. System according to claim 3, wherein the heater is connected to the gas inlet such that it can heat gas entering the chemical combustion reactor through said gas inlet and/or wherein one or more, preferably each of the heat exchangers is thermally connected to a different heater such that the HTF in each heat exchanger can be independently heated from the other heat exchangers.

5. System according to any of the previous claims comprising a plurality of the chemical combustion reactor, wherein each reactor can be operated (*i.e.* charged and discharged) independently such that a modular system is provided.

6. System according to any of the previous claims, wherein the chemical combustion reactor has a cylinder shape.

7. System in accordance with any of the previous claims, further comprising a HTF storage tank that is in fluid connection to said heat exchangers.

8. System in accordance with any of the previous claims, further comprising a reducing gas supply system (8), preferably a hydrogen gas supply system, more preferably a water electrolyzing apparatus comprising a hydrogen gas outlet (81) that is connected to the gas inlet (5) of the chemical combustion reactor and more preferably a water inlet (82) that is connected to the gas outlet (6) of the chemical combustion reactor.

9. System according to any of the previous claims, wherein the metal comprises one or more metals selected from the group consisting of Al, Ti, V, Cr, Mn, Fe, Co, Ni, Cu, Zn, Zr and Sn, preferably Cu, Fe, Ni, Co, and Mn, more preferably copper or ilmenite.

10. System according to any of the previous claims, wherein the chemical combustion reactor is a fixed bed chemical combustion reactor that is at least partially filled with one or more fixed beds comprising said metal and/or an oxide thereof.

11. System according to claim 10, wherein the fixed bed has a porous structure of which the exposed surface is preferably essentially entirely covered with said metal.

12. Method for storing energy in a system in accordance with any of the previous claims, said method comprising providing a reducing gas stream, preferably a reducing gas stream comprising hydrogen gas, and leading said reducing gas stream into the chemical combustion reactor and allowing the reducing gas stream to react with a metal oxide in the chemical combustion reactor to reduce the metal oxide.

13. Method for discharging energy from a system in accordance with any of claims 1-11, said method comprising providing an oxidizing gas stream, preferably an oxidizing gas stream comprising oxygen gas, and leading said oxidizing gas stream into the chemical combustion reactor and allowing the oxidizing gas stream to react with a metal in the chemical combustion reactor to oxidize the metal.

14. Use of the system according to any of claims 1-11 for providing heat for a house or an industrial process.
